Europäisches Patentamt

European Patent Office

Office européen des brevets

(11) Veröffentlichungsnummer : **0 054 305 B1**

# EUROPÄISCHE PATENTSCHRIFT

(45) Veröffentlichungstag der Patentschrift :
**13.06.84**

(51) Int. Cl.³ : **B 23 B 27/16**

(21) Anmeldenummer : **81110486.8**

(22) Anmeldetag : **16.12.81**

(54) **Schneidplattenhalterung für Fräs- und Drehwerkzeuge.**

(30) Priorität : **17.12.80 DE 3047459**

(43) Veröffentlichungstag der Anmeldung :
**23.06.82 Patentblatt 82/25**

(45) Bekanntmachung des Hinweises auf die Patenterteilung : **13.06.84 Patentblatt 84/24**

(84) Benannte Vertragsstaaten :
**FR GB IT SE**

(56) Entgegenhaltungen :
**US-A- 3 320 654**

(73) Patentinhaber : **Santrade Ltd.**
**Alpenquai 12 P.O. Box 321**
**CH-6002 Luzern (CH)**

(72) Erfinder : **Wermeister, Günter**
**Witzelstrasse 1a**
**D-4000 Düsseldorf 1 (DE)**

(74) Vertreter : **Wangemann, Horst, Dipl.-Ing.**
**Stresemannstrasse 28**
**D-4000 Düsseldorf (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf eine Schneidplattenhalterung für Fräs- und Drehwerkzeuge in einer Ausnehmung eines Schneidplattenhalters nach dem Oberbegriff des Hauptanspruches.

Durch die US-A-3 670 380 ist eine Schneidplattenhalterung bekannt, bei welcher die Schneidplatte ohne an den Begrenzungswänden einer Ausnehmung des Schneidplattenhalters anzuliegen durch den konischen Kopf einer Spannschraube gehalten wird, der gegen den ringartigen äußeren Rand einer mittigen Bohrung der Schneidplatte anliegt. Da die Schneidplatte selbst keine Anlage an Begrenzungswänden einer Ausnehmung des Schneidplattenhalters findet, dient zur lagemäßigen Orientierung und Festlegung der Schneidplatte um die Achse der Spannschraube, d. h. um ein Drehen der Schneidplatte zu vermeiden, eine längsgeschlitzte, die Spannschraube umfassende und mit einem viereckigen Außenumfang versehene, längsgeschlitzte Hülse, die in eine im Querschnitt viereckige Ausnehmung der Schneidplatte, wie auch in eine entsprechende koaxiale viereckige Ausnehmung des Schneidplattenhalters ragt. Durch die Hülse wird jedoch bei dieser bekannten Schneidplattenhalterung kein radiales Festspannen der Schneidplatte erzielt, vielmehr wird, wie dargelegt, das Festhalten der Schneidplatte an dem Schneidplattenhalter durch das axiale Anziehen der Schraube erreicht. — Zum Auswechseln der Schneidplatte bzw. zum Wenden einer Wendeplatte muß die Spannschraube vollständig aus dem Gewinde des Schneidplattenhalters herausgeschraubt werden.

Durch die US-A-3 320 654 ist eine Schneidplattenhalterung mit den Merkmalen des Oberbegriffs des Hauptanspruches bekannt. Hierbei ist der aus der Gewindebohrung des Schneidplattenhalters herausragende Abschnitt der Spannschraube konisch ausgebildet, wie auch die Innenwand der längsgeschlitzten Hülse eine entsprechende konische Ausbildung besitzt. Die radiale Spannwirkung dieser bekannten Schneidplattenhalterung beruht darauf, dass bei Anlage der Schneidplatte an den Begrenzungswänden der Ausnehmung des Schneidplattenhalters die Längsachse der Gewindebohrung des Schneidplattenhalters exzentrisch gegenüber der konischen Bohrung der Schneidplatte vorgesehen ist. Bei dieser Schneidplattenhalterung erfolgt somit das radiale Spannen der Schneidplatte gegen die Wände der Ausnehmung des Schneidplattenhalters durch Keilwirkung des konischen Abschnittes der Spannschraube und des konischen Innenbereich der längsgeschlitzten Hülse. — Bei dieser Schneidplattenhalterung wird lediglich eine radiale Spannwirkung erzielt ; die zur Anwendung gelangenden Mittel sind insofern aufwendig, als die Spannschraube einen besonders gestalteten konischen Abschnitt haben, wie auch die Hülse selbst einen konischen Innenteil aufweisen muß, der dem konischen Bereich der Spannschraube entspricht. Durch die konische Ausbildung des Spannbereiches der Spannschraube erfährt diese in radialer Richtung eine Schwächung. Bei der Schneidplattenhalterung nach der US-PS 3 320 654 bedarf es eines derartigen Herausschraubens der Spannschraube, dass das doppelte Maß der Exzentrizität zwischen der Gewindebohrung der Schraube und der Bohrung in der Schneidplatte überbrückt ist.

Demgegenüber liegt der Erfindung die Aufgabe zugrunde, eine Schneidplattenhalterung nach dem Oberbegriff des Hauptanspruches zu schaffen, bei welcher der Aus- und Einbau bzw. das Wenden der Schneid- bzw. Wendeplatte ohne Herausschrauben der Halteschraube erfolgen kann und dabei nur eine geringe Drehung der Halteschraube um 90 bis 180° notwendig ist.

Diese Aufgabe wird durch die Merkmale des kennzeichnenden Teils des Anspruchs 1 angegeben.

Ferner soll es mit der erfindungsgemäßen Schneidplattenhalterung möglich sein, nicht nur eine radiale Spannwirkung der Spannschraube zu erzielen, sondern auch eine axiale Spannwirkung, die besonders dann vorteilhaft ist, wenn die Schneidplatte oder die Wendeplatte eine einfach — oder doppelkonische Wand in ihrer zentralen Bohrung aufweist. Ferner sollen einfache handelsübliche genormte Teile oder daraus leicht herstellbare Teile zur Anwendung kommen. Dies bezieht sich insbesondere auf die Spannschraube und die längsgeschlitzte Hülse. Eine Schwächung dieser Teile durch besondere Formgestaltung soll hierbei vermieden werden. — Desweiteren soll bei Erfüllung der vorstehenden Forderungen eine genau gerichtete radiale Spannung gegen die Wände der die Schneidplatte aufnehmende Ausnehmung des Schneidplattenhalters erzielt werden. In den Unteransprüchen sind daher weitere Ausgestaltungen der Erfindung angegeben.

Auf der Zeichnung ist ein Ausführungsbeispiel der erfindungsgemäßen Schneidplattenhalterung wiedergegeben und zwar zeigt

Figur 1 die zur Anwendung gelangende Spannschraube,

Figur 2 die längsgeschlitzte Hülse in einer Ausführungsform,

Figur 3 einen teilweisen Schnitt durch die Schneidplattenhalterung mit der das Gewinde der Spannschraube aufnehmenden Gewindebohrung und deren die Schulter bildenden Erweiterung,

Figur 4 die Lage der Spannschraube und der Hülse an dem Schneidplattenhalter mit Ansicht gegen den Längsschlitz der Hülse und die Nut in dem Schneidplattenhalter,

Figuren 5 und 9 ein weiteres Ausführungsbeispiel der Hülse,

Figuren 6 bis 8 die Lage der Schraube und der Hülse bei Beginn und während des Einschraubens der Spannschraube in die Bohrung des Gewindes des Schneidplattenhalters und

Figur 10 in Draufsicht die Ausnehmung des Schneidplattenhalters mit deren Seitenbegrenzungswänden sowie die Draufsicht auf die Bohrung des Schneidplattenhalters.

Die zur Anwendung gelangende Spannschraube 1 weist einen oberen zylindrischen Schaftteil 2 und einen unteren Gewindeteil 3 auf, zwischen denen ein kurzer zylindrischer Bereich 4 vorgesehen sein kann. Von der gewölbten Oberseite 5 aus erstreckt sich eine Innenmehrkantausnehmung 6 gegen den Fuß 7 der Schraube, so dass die Schraube mit Hilfe eines in die Ausnehmung 6 gesteckten Mehrkantwerkzeuges gedreht werden kann. — An die gewölbte Oberseite der Schraube schließt sich ein kurzer konischer Abschnitt 8 an, dessen Länge nur einen Bruchteil der Länge des zylindrischen Schaftteils 2 ausmacht. Das Verhältnis der Länge des zylindrischen Schaftteils zu der des konischen Abschnitts 8 kann 5 : 1 und größer sein.

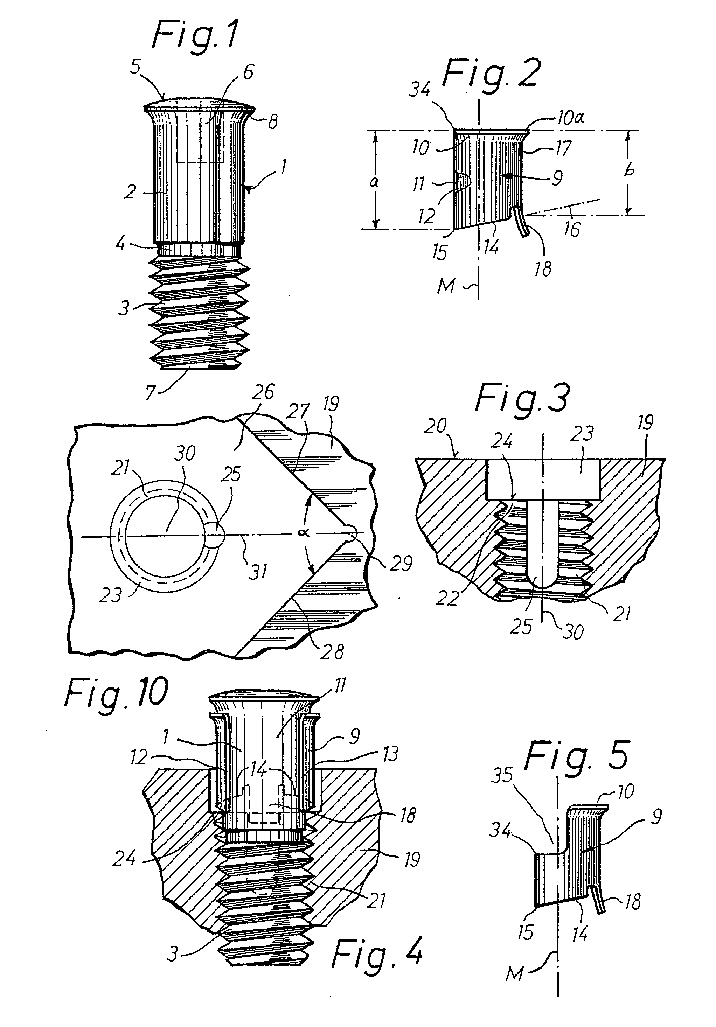

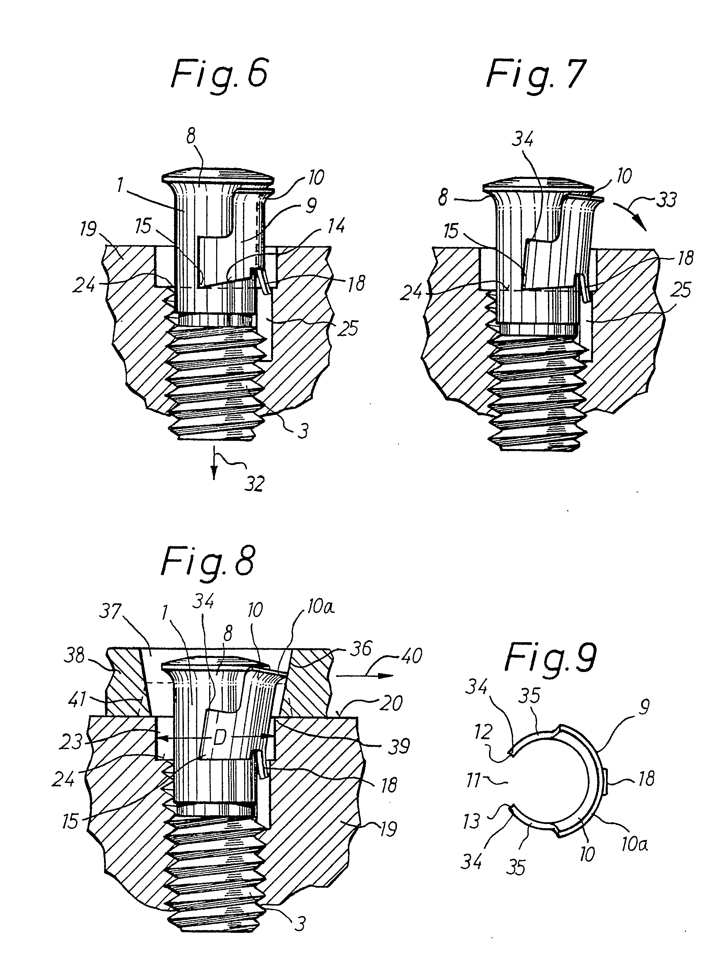

Die beiden in den Fig. 2, 5 und 9 wiedergegebenen Ausführungsformen der zur Anwendung gelangenden Hülse unterscheiden sich nur unwesentlich, weswegen zunächst beide Ausführungsformen gemeinsam behandelt werden. Die Hülse 9 besteht aus dünnwandigem Federmaterial und bildet an ihrem oberen Ende einen kragenförmig nach außen gerichteten Rand 10, dessen Neigung gegen die Senkrechte der Neigung des Abschnitts 8 der Schraube 1 entsprechen kann. An der einen Seite weist die Hülse 9 einen Längsschlitz 11 auf (Fig. 9), der durch die beiden Längskanten 12, 13 begrenzt wird. Durch den Längsschlitz 11 bedingt erstreckt sich der Umfang der Hülse 9 über einen Winkelbereich zwischen 200 und 330°. Die Hülse ist so gearbeitet, dass sie den Schaft 2 der Schraube 1 eng umfasst und vorzugsweise von unten über das Gewinde 3 auf den Schaftteil 2 aufgeschoben werden kann.

Die untere Kante 14 der Hülse 9 verläuft von den beiden unteren Ecken 15 der Seitenkanten 12, 13 in einer Raumkurve derart, dass bei der Ausführungsform nach Fig. 2 die Länge der Kanten 12, 13, d. h. der Abstand a zwischen dem oberen Rand 10 und den unteren Ecken 15 der Seitenkanten 12, 13 größer ist als der Abstand b des Randes 10 von der projektierten Verlängerung 16 der unteren Kante 14, d. h. größer ist als die Länge der dem Schlitz abgekehrten Hülsenseite 17. Dieser geneigte Verlauf der unteren Kante 14 ist für die unten stehende noch näher erläuterte Funktion der Hülse von Bedeutung und ist auch bei der Ausführungsform nach Fig. 5 und 9 zu finden.

An der dem Schlitz 11 abgekehrten Seite 17 trägt die Hülse 9 eine über die untere Kante 14 nach unten ragende Nase oder einen Ansatz 18, die bzw. der leicht nach außen gebogen ist, wie dies Fig. 2 und 5 erkennen lassen. Diese Nase oder der Ansatz bildet ein Führungselement, das das Drehen der Hülse um ihre Mittelachse M (Fig. 2 und 5) verhindert.

Der Schneidplattenhalter 19 weist eine zu seiner Oberfläche 20 senkrechte Gewindebohrung 21 auf, zwischen deren oberen Ende 22 und der Oberseite 20 des Schneidplattenhalters sich eine zylindrische Erweiterung 23 der Gewindebohrung erstreckt, die eine Schulter oder Stufe 24 bildet. Von dieser Erweiterung 23 geht in Längsrichtung der Gewindebohrung 21 und in diese übergehend eine Nut 25 aus, deren Breite so gewählt ist, daß die Nase oder der Ansatz 18 in ihr zu gleiten vermag.

Wie aus Fig. 10 erkennbar ist, weist der Schneidplattenhalter 19 eine Ausnehmung 26 auf, die von den beiden Seitenwänden 27, 28 begrenzt wird, die einen Winkel α zwischen sich einschliessen. Der Schnittpunkt der beiden Seitenwände 27, 28 ist mit 29 bezeichnet ; seine Verbindungslinie mit der Längsachse 30 der Gewindebohrung 21 zeigt die Bezugsziffer 31, die die Winkelhalbierende des Winkels α bildet. Auf dieser Verbindungslinie 31 ist die Nut 25 symmetrisch angeordnet.

Fig. 4 läßt die Lage der beschriebenen Einzelteile an dem Schneidplattenhalter 19 erkennen. Hierbei ist die Spannschraube 1 mit ihrem Gewinde 3 in das Gewinde der Bohrung 21 eingeschraubt und die Hülse 9 umfaßt den Schaftteil 2 der Spannschraube, wobei die Nase oder der Ansatz 18 in die Nut 25 derart ragt, daß die Hülse symmetrisch zur Verbindungslinie 31 zwischen dem Schnittpunkt 29 der beiden Seitenwände 27, 28 und der Längsachse 30 der Bohrung 31 gelegen ist.

Wird nun, wie Fig. 6 und 7 zeigen, die Schraube 1 mit Hilfe eines geeigneten Werkzeuges in Richtung des Pfeiles 32 in die Gewindebohrung 21 eingeschraubt, kommen, sofern dies nicht bereits vorher geschehen ist, die Ecken 15 an den unteren Enden der Seitenkanten 12, 13 der Hülse 9 zur Auflage auf der Schulter 24. Im Verlaufe des weiteren Einschraubens der Schraube 1, wie dies Fig. 7 darstellt, drückt der konische Abschnitt 8 der Schraube 1 den nach außen gebogenen Rand 10 der Hülse in Richtung des Pfeiles 33, wobei die Hülse wegen der Auflage seiner unteren Ecken 15 auf der Schulter oder Stufe 24 eine Kippbewegung um eine Querachse zur Schraube 1 in Richtung des Pfeiles 33 vollführt, wobei das obere Ende 34 der Seitenkanten 12, 13, die den Schlitz 11 begrenzen, in die Lage nach Fig. 7 gelangt. Hierbei erfährt die aus Federmaterial bestehende Hülse eine leichte Aufbiegung auf Höhe der Enden 34.

Wie aus dem Unterschied zwischen den Ausführungsformen nach Fig. 2 und 5 erkennbar ist, kann die Hülse 9 einen Einschnitt 35 (Fig. 5) erfahren, so daß die obere Ecke der Seitenkanten 12, 13 tiefer als der obere Rand 10 gelegen ist. Hierdurch bedarf die Hülse 9 einer geringeren Aufbiegung als bei dem Ausführungsbeispiel nach Fig. 2.

Bei der Drehbewegung der Schraube 6, 7 bleibt die Hülse in ihrer vorbestimmten Lage symmetrisch zu der Verbindungslinie 31 (Fig. 10), da die Nase oder der Ansatz 18 in die Nut 25 eingreift und die Hülse hierbei verschieblich und neigbar bleibt.

In der Endstellung nach Fig. 8 liegt der obere Rand 10 der Hülse gegen die geneigte konische Wand 36 der Bohrung 37 der Schneidplatte 38 an. Hierbei ergibt sich eine linienförmige Berührung zwischen der Außenkante 10a und der Wand 36 der Bohrung 37. Hierzu ist der Durchmesser D der Erweiterung 23 des Schneidplattenhalters 19 derart gewählt, daß ihre Randkante 39 die Hülse 9 nicht berührt, diese vielmehr alleine Auflage mit ihren Kanten 15 auf der Schulter oder der Stufe 24 und mit ihrem Rand 10 an der Seitenwand 36 der Ausnehmung 37 des Werkzeugs erhält.

Wie die Darstellung in Fig. 8 erkennen läßt, bewirkt die Hülse 9 nicht nur ein radiales Verspannen der Schneidplatte 38 in Richtung des Pfeiles 40 gegen die Seitenwände 27 und 28 der Schneidplattenausnehmung 26 des Schneidplattenhalters 19, vielmehr wird, wie dies auch der Pfeil 33 in Fig. 7 veranschaulicht, eine gegen die Oberseite 20 des Schneidplattenhalters 19 gerichtete Kraft ausgeübt, die insbesondere dann vorteilhaft wirksam wird, wenn wie in Fig. 8 dargestellt, die Schneidplatte eine konische Bohrung 37 besitzt. — Bei einer Wendeplatte wird aus der einfach konischen Bohrung 37 eine doppelkonische Bohrung, was durch die gestrichelte Linie 41 versinnbildlicht ist, so daß die Kippwirkung der Hülse und damit das Anpressen der Wendeplatte auf die Oberseite 20 des Schneidplattenhalters stets gegeben ist.

Die vorstehend beschriebene Wirkungsweise der erfindungsgemäßen Schneidplattenhalterung verdeutlicht auch, daß es genügt, die Schraube 1 um etwa 90 bis 180° zu drehen, so daß die Hülse 9 mit ihrem Rand 10 in die Ausgangslage oder zumindest in eine Lage gelangt, in welcher der Rand 10 der Hülse 9 die Wand 36 bzw. 41 freigibt.

## Ansprüche

1. Schneidplattenhalterung für Fräs- und Drehwerkzeuge in einer Ausnehmung (26) eines Schneidplattenhalters (19), mit einer durch eine senkrecht zur Plattenebene vorlaufende Bohrung (21, 23) ragende, mit ihrem Gewinde in ein Gewinde des Schneidplattenhalters einschraubbaren Schraube (1) und mit einer zwischen der Schraube und der Bohrungsinnenwand der Schneidplatte angeordneten, längsgeschlitzten, die Schraube umfassenden zylindrischen Hülse (9), deren dem Schraubkopf (5, 8) abgekehrtes Ende auf einer Schulter (24) des Plattenhalters axial aufliegt, dadurch gekennzeichnet, daß die Hülse (9) im wesentlichen einen Hohlzylinder darstellt, der so ausgebildet ist, daß er unter Zusammenwirkung mit dem Schraubkopf beim Anziehen der Schraube (1) um eine Querachse der Schraube (1) seitlich gegen die Bohrungsinnenwand (36) der Schneidplatte (38) neigbar ist.

2. Schneidplattenhalterung nach Anspruch 1, dadurch gekennzeichnet, daß die Hülse (9) aus Federmaterial besteht.

3. Schneidplattenhalterung nach Anspruch 1 und 2, dadurch gekennzeichnet, daß die Schulter (24) des Schneidplattenhalters (19) als zur Schneidplatte parallele Stufe ausgebildet ist und die untere Kante (14) der Hülse (9) derart geneigt zur Hülsenlängsachse verläuft, daß sich die Enden (15) der beiden den Längsschlitz begrenzenden Kanten (12, 13) beim Anziehen der Schraube (1) auf der Schulter (24) abstützen.

4. Schneidplattenhalterung nach Anspruch 3, dadurch gekennzeichnet, dass die die Schulter (24) darstellende Stufe durch eine Erweiterung (23) der Gewindebohrung (21) des Schneidplattenhalters (19) gebildet ist.

5. Schneidplattenhalterung nach Anspruch 1 bis 4, dadurch gekennzeichnet, dass der obere Rand (10) der Hülse (9) kragenförmig nach außen verformt ist.

6. Schneidplattenhalterung für Fräswerkzeuge nach Anspruch 1 bis 5, dadurch gekennzeichnet, dass der Umfang der Hülse (9) an ihrem dem Schraubenkopf benachbarten Ende kleiner ist als an dem dem Schraubengewinde (3) benachbarten zweiten Hülsenende.

7. Schneidplattenhalterung nach Anspruch 1 und einem oder mehreren der Ansprüche 1 bis 6, dadurch gekennzeichnet, dass von der Schulter (24) des Wendeplattenhalters (19) ausgehend in diesem eine in die Gewindebohrung (21) des Schneidplattenhalters (19) übergehende und sich parallel zu dieser erstreckende Nut (25) angeordnet ist.

8. Schneidplattenhalterung nach Anspruch 1 und 7, dadurch gekennzeichnet, dass die Hülse (9) an ihrem unteren Rand einen ihrem Längsschlitz (11) diametral gegenüberliegenden Ansatz oder Nase (18) trägt, die in die Nut (25) des Schneidplattenhalters ragt.

9. Schneidplattenhalterung nach Anspruch 1, 7 und 8, dadurch gekennzeichnet, dass die Nut (25) des Schneidplattenhalters (19) auf der Verbindungslinie (31) der Gewindebohrungsachse (30) und dem Schnittpunkt (29) der Begrenzungswände (27, 28) der der Aufnahme der Schneidplatte (38) in dem Schneidplattenhalter (19) dienenden Halterausnehmung (26) angeordnet ist.

10. Schneidplattenhalterung nach Anspruch 1 und einem oder mehreren der Ansprüche 2 bis 9, dadurch gekennzeichnet, dass die Bohrung der Schneidplatte konisch ausgebildet ist.

11. Schneidplattenhalterung nach Anspruch 1 bis 10 als Wendeplattenhalterung dadurch gekennzeichnet, dass die Bohrung der Wendeplatte doppelkonisch ausgebildet ist.

12. Schneidplattenhalterung nach Anspruch 1 und einem oder mehreren der Ansprüche 2 bis 11, dadurch gekennzeichnet, dass die die Schulter (24) für die untere Hülsenkante (14) bildende Bohrungserweiterung (23) einen derartigen Durchmesser (D) hat, dass die gekippte Hülse (9) einen Abstand zwischen sich und der Wand der Erweiterung (23) beläßt.

## Claims

1. A cutting tip support for milling and turning tools in a pocket (26) in a cutting tip holder (19), comprising a screw (1) running out through a hole (21, 23) running out at a right angle to the plane of the cutting tip, the thread of said screw being able to be screwed into a thread of the cutting tip holder, and a cylindrical sleeve (9) placed round said screw (1), said sleeve being placed between the screw and the inner face of the hole in the cutting tip, said sleeve further having a slot running therealong, characterized in that the sleeve (9) generally has the form of a hollow cylinder, same being so designed that the cylinder, functioning with the screw head on doing up the screw (1), may be put at a slope about a crosswise axis of the said screw (1) sideways with motion towards the inner face (36) of the hole in the cutting tip (38).

2. The cutting plate support as claimed in claim 1, characterized in that the sleeve (9) is made of spring material.

3. The cutting plate support as claimed in claim 1 and claim 2, characterized in that the shoulder (24) of the cutting tip holder (19) is in the form of a step running parallel to the cutting tip and the lower edge (14) of the sleeve (9) is placed at such a slope in relation to the lengthways axis of the sleeve that the ends (15) of the two edges (12 and 13) forming the limits of the lengthways slope take support on the shoulder (24) on doing up the screw (1).

4. The cutting plate support as claimed in claim 3, characterized in that the step forming the said shoulder (24) is formed by a wider part (23) of the threaded hole (21) of the cutting tip holder (19).

5. The cutting plate support as claimed in any one claims 1 to 4, characterized in that the top edge (10) of the said sleeve (9) is in the form of and outwardly running collar.

6. The cutting plate support as claimed in any one claims 1 to 5, characterized in that the circumference of the sleeve (9) is smaller at its end next to the head of the screw than at the second end thereof next to the screw thread (3).

7. The cutting plate support as claimed in claim 1 and any one of more of the claims 1 to 6, characterized by a groove (25) starting at the shoulder (24) of the reversible cutting tip holder (19), said groove (25) running therein into the threaded hole (21) of the cutting tip holder (19) and being parallel thereto.

8. The cutting plate support as claimed in claims 1 and 7, characterized in that at its lower edge the sleeve (9) has a head or nosepiece (18) that is diametrally opposite to its lengthways slot (11), said nosepiece (18) running into the groove (25) of the cutting plate holder.

9. The cutting plate support as claimed in claims 1, 7 and 8, characterized in that the groove (25) of the cutting tip holder (19) is placed on the connection line (31) between the axis (30) of the threaded hole and the point of cutting (29) between the limiting faces (27 and 29) of the supporting pocket (26) used to take up the cutting tip (38) in the cutting tip holder (19).

10. The cutting plate support as claimed in claim 1 and any one or more of the claims 2 to 9, characterized in that the hole in the cutting tip is coned.

11. The cutting plate support as claimed in any one of claims 1 to 10, designed in the form of a reversible tip characterized in that the hole in the reversible tip is doubly coned.

12. The cutting plate support as claimed in claim 1 and any one or more of the claims 2 to 11, characterized in that the wider part (23) of the hole forming the shoulder (24) for the lower sleeve edge (14) has such a diameter (D) that the sleeve (9) when put at a slope is spaced from the wall of the wider part (23).

**Revendications**

1. Fixation de plaquette de coupe pour outils de fraisage et de tournage dans un évidement (26) d'un support (19) de la plaquette de coupe muni d'une vis (1) pouvant être vissée dans un alésage taraudé (21, 23) perpendiculaire à la surface de la plaquette avec un filetage dans l'alésage taraudé du support de la plaquette de coupe et d'une douille cylindrique (9) entourant la vis présentant une fente longitudinale et montée entre la vis et la paroi intérieure de l'alésage, douille dont le côté opposé à la tête de la vis (5, 8) repose axialement sur un épaulement (24) du support de la plaquette, caractérisée en ce que la douille (9) présente la forme d'un cylindre creux qui est réalisé de telle manière qu'en coopérant avec la tête de la vis et lors du serrage de la vis (1) il soit inclinable selon un axe transversal de la vis (1) contre la paroi intérieure (36) de l'alésage de la plaquette de coupe (38).

2. Fixation de plaquette de coupe selon la revendication 1, caractérisée en ce que la douille (9) est constituée en matériel élastique.

3. Fixation de plaquette de coupe selon les revendications 1 et 2, caractérisée en ce que l'épaulement (24) du support (19) de la plaquette de coupe est réalisé en tant que marche parallèle à la plaquette de coupe et en ce que le rebord inférieur (14) de la douille (9) est incliné par rapport à l'axe longitudinal de la douille de telle manière que les extrémités (15) des deux rebords (12, 13) délimitant la fente longitudinale s'appuient sur l'épaulement (24) lors du serrage de la vis (1).

4. Fixation de plaquette de coupe selon la revendication 3, caractérisée en ce que la marche représentant l'épaulement (24) est réalisée par un élargissement (23) dans l'alésage taraudé (21) du support (19) de la plaquette de coupe.

5. Fixation de plaquette de coupe selon les revendications 1 à 4, caractérisée en ce que la bordure supérieure (10) de la douille (9) présente une conformation en forme de collet orienté vers l'extérieur.

6. Fixation de plaquette de coupe pour outils de fraisage selon les revendications 1 à 5, caractérisée en ce que la circonférence de la douille (9) est plus petite à ses extrémités voisines de la tête de vis que les deuxièmes extrémités de douille voisine du filetage de la vis (3).

7. Fixation de plaquette de coupe selon l'une des revendications 1 à 6, caractérisée en ce qu'une rainure (25) s'étend de l'épaulement (24) du support (19) de la plaquette réversible dans le taraudage de l'alésage (21) du crampon (19) de la plaquette de coupe et ce de façon parallèle au filetage.

8. Fixation de plaquette de coupe selon les revendications 1 à 7, caractérisée en ce que la douille (9) porte un talon (18) à son bord inférieur diamétralement opposé à la fente longitudinale (11), talon qui forme saillie dans la rainure (25) du crampon de la plaquette de coupe.

9. Fixation de plaquette de coupe selon les revendications 1, 7 et 8, caractérisée en ce que la rainure (25) du support (19) de la plaquette de coupe est prévue sur la ligne de jonction (31) de l'axe (30) de l'alésage taraudé et du point d'intersection (29) des parois de délimitation (27, 28) de l'évidement (26) servant à la réception de la plaquette de coupe (38) dans le support (19) de la plaquette de coupe.

10. Fixation de plaquette selon la revendication 1 et l'une ou plusieurs des revendications 2 à 9, caractérisée en ce que l'alésage dans la plaquette de coupe est réalisé en forme de cône.

11. Fixation de plaquette de coupe selon les revendications 1 à 10, en tant que fixation de plaquette réversible, caractérisée en ce que l'alésage de la plaquette réversible est réalisé en forme de cône double.

12. Fixation de plaquette de coupe selon la revendication 1 et l'une ou plusieurs des revendications 2 à 11, caractérisée en ce que l'élargissement (23) formant l'épaulement (24) pour le rebord inférieur (14) de la douille présente un diamètre (D) tel que la douille (9) inclinée laisse un espace entre elle et la paroi de l'élargissement (23).

Fig.1

Fig.2

Fig.3

Fig.10

Fig.5

Fig.4

1

# Fig.6

# Fig.7

# Fig.8

# Fig.9